# EUROPEAN PATENT SPECIFICATION

(11) **EP 2 340 714 B1**
(45) Date of publication and mention of the grant of the patent: **07.05.2014**
(21) Application number: 10192782.0
(22) Date of filing: 26.11.2010
(51) Int. Cl.: A21B 1/50, A21B 3/02

(54) **Oven of the type with trolley with leak collection device**
Stikkenofen mit Kondensatauffang
Four à chariot avec collecteur de condensats

(30) Priority: 29.12.2009 IT PD20090398
(43) Date of publication of application: 06.07.2011
(73) Proprietor: Unox S.p.A., 35010 Vigodarzere (Padova) (IT)
(72) Inventor: Franzolin, Enrico, 35010, Vigodarzere (PD) (IT)
(74) Representative: Fabris, Stefano

(56) References cited:
- US-A- 2 974 808
- US-A1- 2006 102 164

## Description

The present invention concerns an oven, in particular an oven of the type with trolley, comprising a closure device associable with the opening of the cooking chamber of the oven, having the features mentioned in the preamble of the main claim No. 1.

The invention has its place in the specific field of cooking ovens, of the type "with trolley", in which provision is made in the cooking chamber for housing a pan supporting structure mounted on a movable trolley. The structure with pan supporting shelves is intended to be received inside the cooking chamber while the lower frame of the trolley, provided with wheels, remains outside the chamber. In order to permit the partial housing of the trolley, the oven door, suitable for closing the cooking chamber in a sealed manner, has at the bottom a recess, so as not to interfere with the frame of the trolley when the latter is housed in the cooking chamber. In the region of the aperture defined by the recess, the seal is ensured by the action of a gasket provided on the door and co-operating with a corresponding front surface of the frame of the trolley, the latter itself being pressed against part of the gasket provided in the area of the oven opening, said gasket interacting for the remaining part with the door of the oven, in order to ensure the sealed closure of the cooking chamber.

In these ovens it is necessary to be able to ensure the sealed closure of the door also in the absence of the pan supporting trolley, for example in the stages of preheating of the oven, or in the stages of washing of the cooking chamber. In the preheating stage it is necessary to ensure the insulation of the cooking chamber without heat dispersion, while in the stage of washing the chamber the sealing action of the door prevents the leakage of liquids from the chamber itself.

In the aforesaid stages, when the pan supporting trolley is withdrawn from the cooking chamber, the sealing of the latter is typically ensured by using a closure plate removably attached to the door or to the oven structure, in the region of the lower recess provided in the door. The plate therefore serves to replace the corresponding front surface of the frame of the trolley and is suitable for co-operating with the gaskets provided on the door and at the opening of the chamber, so as to ensure the seal, following the closure of the oven door. An example of such a sealing plate is known from US 2006/102164.

A problem encountered in these applications of ovens of the type with trolley lies in the fact that in the area of contact of the gaskets with the plate, leakages of liquid may occur, in particular in the stage of washing of the oven, and are destined to emerge from the cooking chamber. The leakages may occur in particular in the region in which there is contact between the lower gasket of the door and the plate, the latter being itself in contact with the gasket extending along the oven opening, in which region it is difficult to ensure a high degree of accuracy in the coplanarity of the coupling surfaces in contact with one another. There is no need for a reminder that the emergence of washing liquid from the cooking chamber, generally mixed with grease and cooking residues, may render difficult and troublesome the cleaning of the oven and also of the external supporting areas thereof.

The problem underlying the present invention is that of providing an oven of the type with trolley with a closure device associable with the opening of the cooking chamber of the oven which is structurally and functionally designed so as to make it possible to remedy the limitations mentioned with reference to the prior art cited.

This problem is solved by the invention by means of an oven with a closure device of the aforesaid type, produced in accordance with the following claims.

Further features and advantages of the invention will become clearer from the following detailed description of a preferred exemplary embodiment thereof, illustrated by way of non-limiting example with reference to the appended drawings, in which:
- Figure 1 is a perspective view of a device for sealed closure according to the invention,

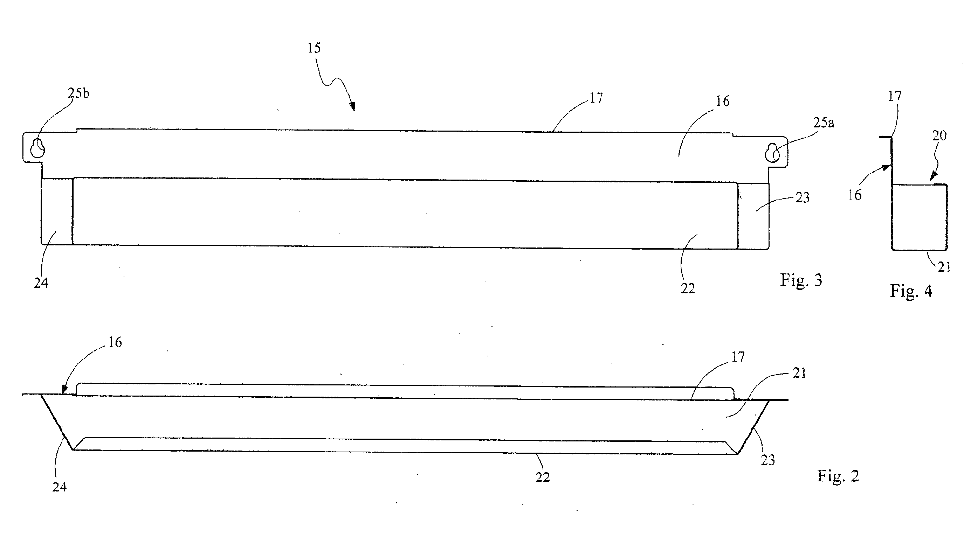

- Figures 2, 3 and 4 are views respectively in plan view, front view and side view of the device of Figure 1,

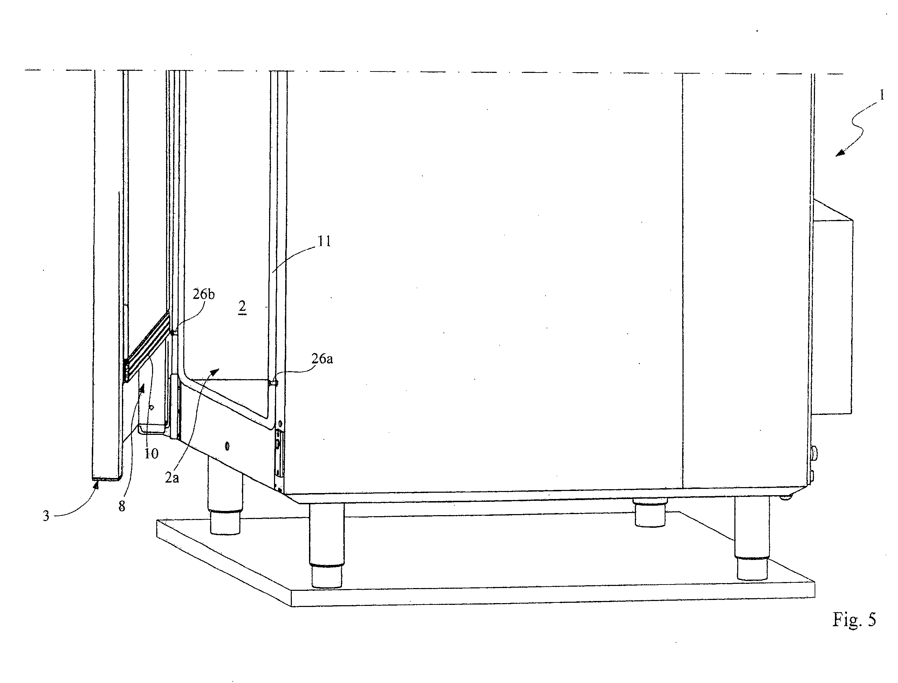

- Figure 5 is a partial perspective view of an oven of the type with trolley, arranged for the use of the device according to the invention,
- Figure 6 is a partial perspective view of the oven of Figure 5, which shows in part the trolley housed in the cooking chamber of the oven,
- Figure 7 is a partial perspective view of the oven of Figures 5 and 6, which shows the use of the closure device according to the invention in the absence of the trolley,

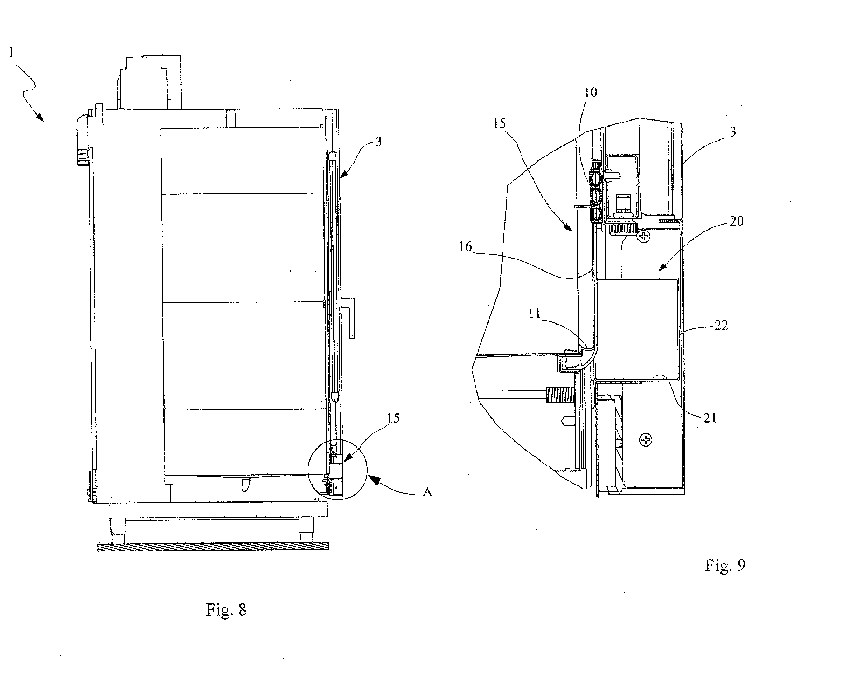

- Figure 8 is a partial side view of the oven of the preceding Figures, in the operative stage of Figure 7,
- Figure 9 is a view in partial section and on an enlarged scale of a detail of the closure device of the preceding Figures, indicated by the arrow A in Figure 8,
- Figure 10 is a perspective view in partial section of an alternative embodiment of the device of the preceding Figures,
- Figure 11 is a perspective view of the alternative embodiment of Figure 10.

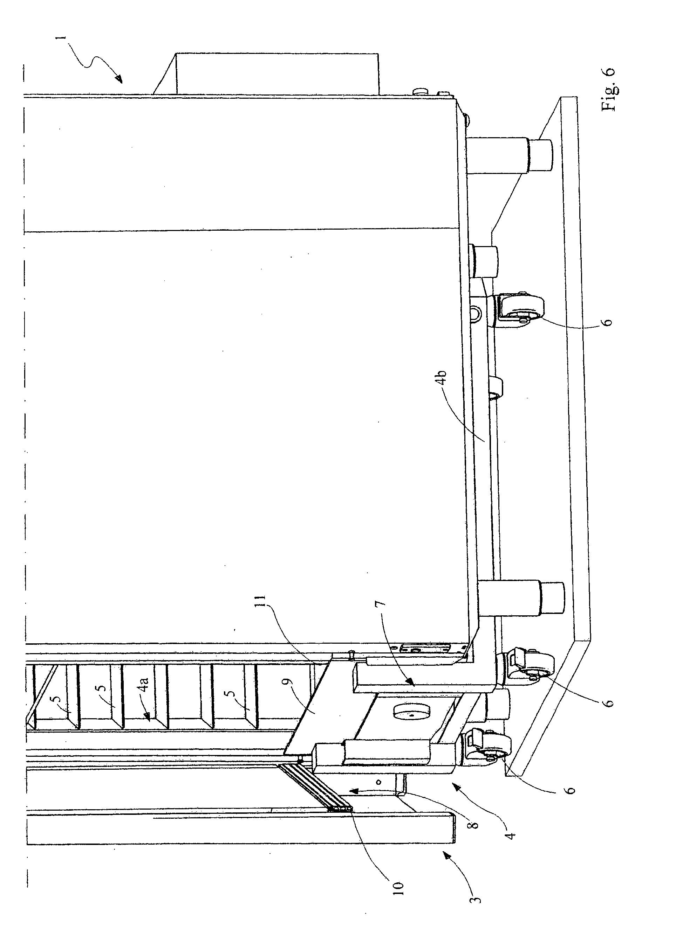

With reference to the drawings mentioned, the reference 1 indicates as a whole a cooking oven comprising a supporting structure in which is provided a cooking chamber 2 with the opening 2a of which a closure door 3 is associated which is mounted in an articulated manner on the supporting structure. The oven 1 is of the type with trolley, that is, arranged for housing in the cooking chamber a pan supporting trolley 4. The trolley comprises an upper support frame 4a for a plurality of pan supporting shelves 5, which is connected to a lower frame 4b provided with wheels 6. The frames are connected by a front supporting structure 7 suitable for keeping the frames suitably spaced apart in order to permit the complete housing of the shelves inside the chamber without interference with the lower wheel bearing frame, as is clearly shown in Figure 6.

In order to permit the sealed closure of the cooking chamber 2 in the presence of the trolley 4, the door 3 has in its lower part a recess 8, so as not to interfere with the front structure 7 of the trolley. Provided on said structure is a plate-like portion 9 extending to close the aperture defined by the recess 8. A surface of the portion 9, following the closure of the door, remains pressed against a section of a gasket 10 provided along the perimeter of the opening of the chamber (the remaining gasket part co-operating with the door), ensuring the seal in the region of the recess 8. On the opposite surface of the portion 9 (following the closure of the door) there acts a gasket 11 provided along a lower edge of the door, in the region of the recess 8. The interaction of the front structure 7 of the trolley with the gaskets 10 and 11 ensures the sealed closure of the cooking chamber in the presence of the trolley 4 inside the chamber, during the cooking stages for which provision is made.

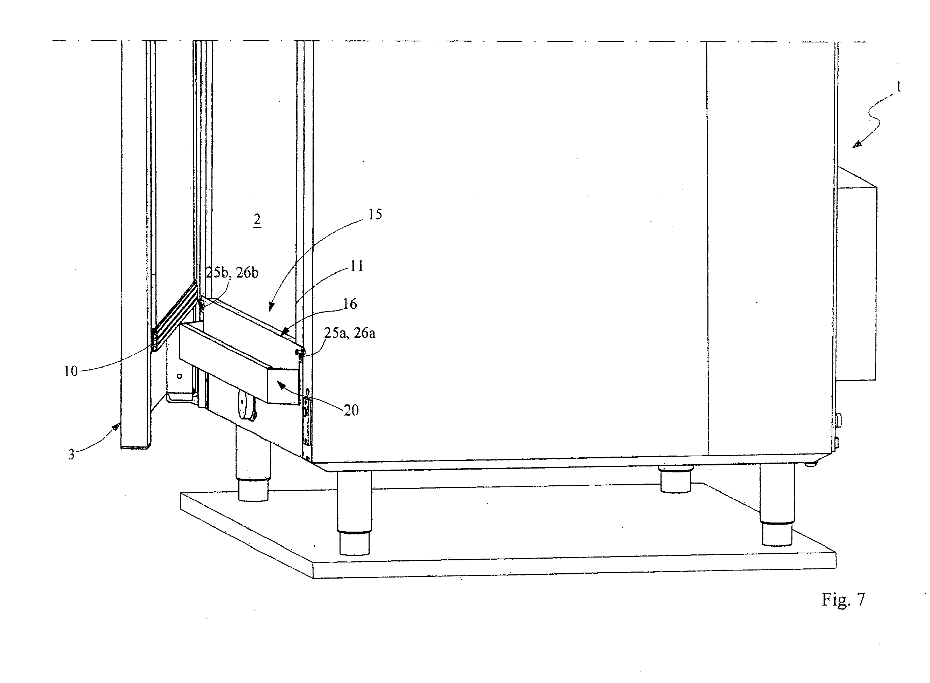

In order to ensure the seal in the absence of the trolley, provision is made for the use of a removable closure device, indicated as a whole by 15, which comprises a plate-like element 16, intended to be removably attached to the oven structure, in the region of the recess 8 of the door, for the purpose of co-operating with the gaskets 10 and 11, in order to ensure the seal when the door 3 is operated for closure of the cooking chamber 2, as is clearly illustrated in Figure 7.

According to a principal feature of the invention, the removable closure device 15 comprises, incorporated in the plate-like element 16, a container element 20, intended to collect any leakage liquid from the sealing surfaces of the gaskets 10 and 11, as will be explained in greater detail in the continuation of the description.

The container element 20 is conveniently configured as a drawer and comprises a bottom 21 extending transversely from the plate-like element 16. The latter also defines one of the lateral walls of the drawer-type structure, opposed to a wall 22 extending parallel thereto. The references 23, 24 designate the lateral walls of the opposed pair of walls extending transversely to the plate-like element 16.

The bottom 21 preferably has a trapezoidal configuration, by reason of which the walls 23, 24 are convergent starting from the plate-like element 16, in the direction of the opposite wall 22.

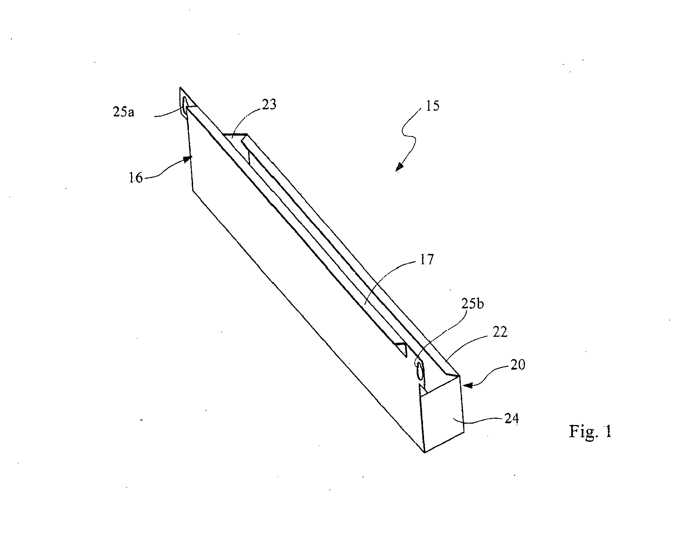

As can be clearly seen from Figure 1, the plate-like element 16 protrudes for a surface section beyond the upper profile of the drawer and has a free edge 17, on the opposite side from the bottom 21, on the opposed ends of which are provided through apertures 25a, 25b, preferably slot-like, suitable for permitting the removable attachment of the plate-like element 16 to the oven structure. A pair of respective pin-type appendages 26a, 26b are provided in a position corresponding to the oven opening for engaging the apertures 25a, 25b and permitting the removable supporting of the closure element 16 on the oven structure. It is to be understood that systems for attachment of the closure device alternative to that described (with pins received in slot-like holes) may be provided, in order to ensure the function of supporting the closure element in a predetermined position on the oven.

It is also to be understood that as an alternative to the system described, the plate-type closure device 15 may be removably attached to the door (instead of to the supporting structure of the oven).

In use, when in the absence of the trolley 4 it is wished to ensure the sealed closure of the cooking chamber 2, for example in the stage of preheating of the oven or in the stage of washing of the chamber itself, the device 15 is attached to the oven structure and the door 3 is then actuated for closure of the oven opening. The gasket 10, integral with the door, is therefore brought into contact with the plate-like element 16 at its upper edge 17, and the element 16 is in addition pressed against a section of the gasket 11, extending below in the region of the recess 8 of the door. Since the door is in contact simultaneously both with the gasket 11 of the chamber 2 and with the plate 16 by means of the gasket 10, liquid leakages are possible owing to the difficulty of ensuring accuracy in the coplanarity of the surfaces in contact, but such leakages may be collected within the container element 20, therefore without any dispersion of liquid outside the oven.

It should also be noted that the container element 20 extends predominantly in a direction parallel to the plane defining the plate-like element 16, while it has a reduced overall dimension transversely to that direction, the overall dimension being of such a size as to be able to be comprised within the thickness of the oven door when the device is attached to the oven.

In addition, the container element 20 may advantageously be obtained in one piece with the plate-like closure element 16, and in particular may be obtained in one piece from bent sheet metal.

The invention therefore achieves the aims proposed, obtaining the advantages indicated with respect to known solutions.

A principal advantage lies in the fact that by means of the closure device according to the invention, the leakages of liquid from the sealing surfaces of the closure door of the oven, in the absence of the trolley, may be collected in order subsequently to be discharged in a suitable, practical and rapid manner without the need for cleaning of the external supporting areas of the oven.

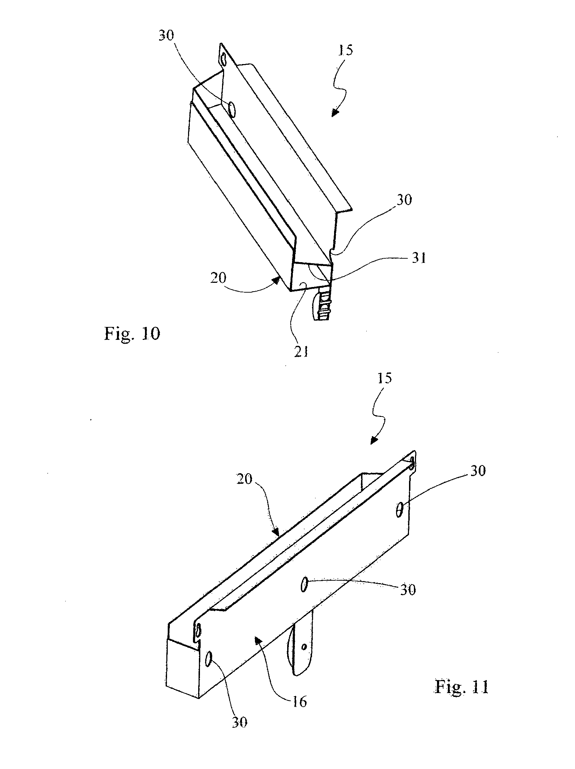

Figures 10 and 11 show an alternative embodiment of the device according to the invention, in which details similar to those of the example described above are designated by the same reference numbers. In this variant, provision is made for the plate-like element 16 to be provided with a plurality of through apertures 30, preferably in the shape of circular holes (three in number in the example shown), and which place the container 20 in fluid communication with the cooking chamber 2, thus acting as drainage holes for conveying the liquid collected in the drawer-type container inside the cooking chamber. The result is that any liquid which drips or leaks from the cooking chamber during the stages of cooking and/or washing of the oven is collected in the drawer and conveyed inside the chamber, preventing it from remaining inside the drawer inasmuch as it may contain aggressive agents, such as for example residues of alkaline detergent and/or acid polishing substance.

In more detail, inside the collecting drawer a surface baffle 31 is provided in a position spaced from the bottom 21 and suitable for acting as a wall or chute for conveying the liquid in the direction of the drainage apertures 30.

The baffle 31, which is conveniently plate-like in shape, extends transversely from the element 16 and has a predetermined inclination in the direction of the apertures 30, in order to facilitate the conveying to discharge of the liquid collected in the drawer.

In a preferred configuration, illustrated in Figures 10 and 11, the baffle 31 extends between the opposed lateral walls 23, 24 and also between the plate-like element 16 and the opposed lateral wall 22 facing it.

With such a configuration, adequate structural rigidity of the drawer-type container is also ensured, improved by the provision of the surface baffle 31 in a position spaced from the bottom 21 of the drawer. It is to be understood, however, that the function of conveying to discharge the liquid collected in the drawer may be performed by the bottom of the drawer-type container itself, suitably arranged with optional inclination in the direction of the drainage apertures 30.

## Claims

1. A cooking oven of the type with trolley, comprising a cooking chamber (2), a door (3) for closing the opening (2a) of said chamber, and a closure device (15) removably associated with the opening of said oven, for the sealed closure of the associated cooking chamber (2) in the absence of the trolley when the door is in its closed position, said device (15) comprising a plate-like element (16) capable of being removably positionable for closing a portion of the opening (2a) of the chamber (2) that is not affected by the closure of the door (3) and capable of permitting the closure of the door when the trolley is inserted into the cooking chamber, said plate-like element (16) co-operating in a sealed manner with respective sections of gaskets (10,11) arranged in the door (3) and in the region of said opening (2a), for the sealed closure of the cooking chamber (2) when the trolley is not inverted in said chamber (2), **characterized in that** said closure device (15) comprises, incorporated in said plate-like element (16), a container element (20) for collecting liquid drawn from the sealing surfaces of said gaskets (10,11).

2. An oven according to claim 1, wherein said container element (20) is configured like a drawer, with a bottom (21) extending transversely from the plate-like (16) element and respective pairs of opposed lateral walls (23,24) extending peripherally in the bottom (21), said plate-like closure element (16) defining at least one of said lateral walls (23,24) of the container.

3. An oven according to claim 2, wherein the bottom (21) of said container (20) is trapezoidal in shape and the lateral wall (22) opposed to the plate-like closure element (16) extends parallel to said element, the lateral walls (23,24) of the other pair extending from the plate-like closure element (16), converging in the direction of the opposite lateral wall (22).

4. An oven according to any one of the preceding claims, wherein means and complementary means are provided for removable attachment of the plate-like element (16) to the structure of the oven or of the door (3).

5. An oven according to claim 4, wherein said means and complementary means for removable attachment comprise a pair of through apertures (25a,25b) provided at the opposed lateral ends of the plate-like element (16), along an edge thereof opposed to that extending in the region of the bottom (21), and a respective pair of pin-type appendages (26a,26b) provided in the region of the opening (2a) of the oven and capable of engaging said apertures (25a,25b) in order to support the closure element (16) on the oven.

6. An oven according to any one of the preceding claims, wherein said container element (20) is obtained in one piece with said plate-like closure element (16) from bent sheet metal.

7. An oven according to any one of the preceding claims, wherein the container element (20) extends predominantly in a direction parallel to the plane defining the plate-like closure element (16), and has a reduced transverse overall dimension with respect to said direction having a dimension such as to be able to remain comprised within the thickness of the door (3) of the oven when fitted.

8. An oven according to any one of the preceding claims, wherein said plate-like element (16) is provided with one or more through apertures (30), such as to place the container (20) in fluid communication with the cooking chamber (2), so that the leakage liquid collected in the container is at least partially conveyed inside the cooking chamber through said one or more apertures (30).

9. An oven according to claim 2 and claim 8, wherein a surface baffle (31) arranged within the container (20) is provided in a position spaced apart from the bottom (21) of said container, and suitable for guiding the liquid collected in the container (20) in the direction of the apertures (30).

10. An oven according to claim 9, wherein said surface baffle (31) extends transversely from the plate-like closure element (16) and has a predetermined inclination in the direction of said apertures (30) in order to facilitate the conveying of the liquid collected in the container.

11. An oven according to claim 10, wherein said surface baffle (31) extends between the opposed lateral walls (23,24) of the container (20) and also between the plate-like element (16) and the opposed lateral wall (22) facing it.

## Patentansprüche

1. Garofen mit einem Wagen, der eine Garkammer (2), eine Tür (3) zum Schließen der Öffnung (2a) der Kammer und eine Verschlussvorrichtung (15), die mit der Öffnung des Ofens entfernbar verbunden ist, zum abgedichteten Verschluss der zugehörigen Garkammer (2) bei Abwesenheit des Wagens, wenn die Tür in ihrer geschlossenen Position ist, aufweist, wobei die Vorrichtung (15) ein plattenförmiges Element (16) aufweist, das zum Schließen eines Bereichs der Öffnung (2a) der Kammer (2) entfernbar und positionierbar sein kann, das nicht durch das Verschließen der Tür (3) beeinträchtigt ist und geeignet ist, das Verschließen der Tür zu ermöglichen, wenn der Wagen in die Garkammer eingeschoben ist, wobei das plattenförmige Element (16) in abgedichteter Weise mit jeweiligen Dichtungsbereichen (10, 11), die in der Tür (3) und im Bereich der Öffnung (2a) angeordnet sind, zum abgedichteten Verschließen der Garkammer (2) zusammenwirkt, wenn der Wagen nicht in die Kammer (2) eingeschoben ist, **dadurch gekennzeichnet, dass** die Verschlussvorrichtung (15) ein Behälterelement (20), das im plattenförmigen Element (16) angeordnet ist, zum Auffangen einer Flüssigkeit aufweist, die von den Dichtflächen der Dichtungen (10, 11) abgegeben wird.

2. Ofen gemäß Anspruch 1, wobei das Behälterelement (20) wie ein Einschub eingerichtet ist, mit einem Boden (21), der sich von dem plattenförmigen Element (16) querverlaufend erstreckt und jeweiligen Paaren von gegenüberliegenden seitlichen Wänden (23, 24), die sich peripher im Boden (21) erstrecken, wobei das plattenförmige Verschlusselement (16) zumindest eine der seitlichen Wände (23, 24) des Behälters definiert.

3. Ofen gemäß Anspruch 2, wobei der Boden (21) des Behälters (20) trapezförmig ist und sich die seitliche Wand (22), die dem plattenförmigen Verschlusselement (16) gegenüberliegt, parallel zum Element erstreckt, wobei die seitlichen Wände (23, 24) des anderen Paars, das sich vom plattenförmigen Verschlusselement (16) erstreckt, in Richtung der gegenüberliegenden seitlichen Wand (22) zusammenlaufen.

4. Ofen gemäß einem der vorhergehenden Ansprüche, wobei eine Einrichtung und eine ergänzende Einrichtung zur entfernbaren Anordnung des plattenförmigen Elements (16) an der Struktur des Ofens oder der Tür (3) vorgesehen sind.

5. Ofen gemäß Anspruch 4, wobei die Einrichtung und die ergänzende Einrichtung zur entfernbaren Anordnung ein Paar von durchgehenden Öffnungen (25a, 25b), die an den gegenüberliegenden seitlichen Enden des plattenförmigen Elements (16) vorgesehen sind, entlang einer Kante davon aufweist, die derjenigen gegenüberliegt, die sich im Bereich des Bodens (21) erstreckt, und ein jeweiliges Paar von stiftförmigen Anhängen (26a, 26b) aufweist, die im Bereich der Öffnung (2a) des Ofens vorgesehen und geeignet sind, um mit den Öffnungen (25a, 25b) in Eingriff zu sein, um das Verschlusselement (16) auf dem Ofen abzustützen.

6. Ofen gemäß einem der vorhergehenden Ansprüche, wobei das Behälterelement (20) mit dem plattenförmigen Verschlußelement (16) durch Biegen von Blech in einem Stück erhalten wird.

7. Ofen gemäß einem der vorhergehenden Ansprüche, wobei sich das Behälterelement (20) vorwiegend in eine Richtung parallel zu der Ebene erstreckt, die das plattenförmige Verschlusselement (16) definiert, und eine reduzierte querlaufende Gesamtdimension bezüglich der Richtung aufweist, die eine Dimension derart aufweist, um innerhalb der Dicke der Tür (3) des Ofens beim Einpassen bleiben zu können.

8. Ofen gemäß einem der vorhergehenden Ansprüche, wobei das plattenförmige Element (16) mit einer oder mehreren durchgehenden Öffnungen (30) versehen ist, um den Behälter (20) in Fluidverbindung mit der Garkammer (2) zu bringen, so dass die Leckageflüssigkeit, die im Behälter aufgefangen ist, zumindest teilweise innerhalb der Garkammer durch eine oder mehrere Öffnungen (30) geleitet wird.

9. Ofen gemäß Anspruch 2 und Anspruch 8, wobei ein Flächenablenkblech (31), das innerhalb des Behälters (20) angeordnet ist, in einer Position vorgesehen ist, die vom Boden (21) des Behälters beabstandet ist, und das zum Weiterleiten der Flüssigkeit, die im Behälter (20) aufgefangen ist, in Richtung der Öffnungen (30) geeignet ist.

10. Ofen gemäß Anspruch 9, wobei sich das Flächenablenkblech (31) vom plattenförmigen Verschlusselement (16) querlaufend erstreckt und eine vorbestimmte Neigung in Richtung der Öffnungen (30) aufweist, um das Weiterleiten der Flüssigkeit, die im Behälter aufgefangen ist, zu ermöglichen.

11. Ofen gemäß Anspruch 10, wobei sich das Flächenablenkblech (31) zwischen den gegenüberliegenden seitlichen Wänden (23, 24) des Behälters (20) und auch zwischen dem plattenförmigen Element (16) und der gegenüberliegenden zugewandten seitlichen Wand (22) erstreckt.

## Revendications

1. Four de cuisson de type à chariot, comprenant une chambre de cuisson (2), une porte (3) pour fermer l'ouverture (2a) de ladite chambre, et un dispositif de fermeture (15) associé de manière amovible à l'ouverture dudit four, pour la fermeture hermétique de la chambre de cuisson (2) associée en l'absence du chariot, lorsque la porte est dans sa position fermée, ledit dispositif (15) comprenant un élément en forme de plaque (16) pouvant être positionné de manière amovible pour fermer une partie de l'ouverture (2a) de la chambre (2) qui n'est pas affectée par la fermeture de la porte (3) et pouvant permettre la fermeture de la porte lorsque le chariot est inséré dans la chambre de cuisson, ledit élément en forme de plaque (16) coopérant d'une manière étanche avec des sections respectifs de joints (10, 11) agencés dans la porte (3) et dans la région de ladite ouverture (2a), pour la fermeture hermétique de la chambre de cuisson (2) lorsque le chariot n'est pas inséré dans ladite chambre (2), **caractérisé en ce que** ledit dispositif de fermeture (15) comprend, incorporé dans ledit élément en forme de plaque (16), un élément formant contenant (20) pour collecter du liquide retiré des surfaces d'étanchéité desdits joints (10, 11).

2. Four selon la revendication 1, dans lequel ledit élément formant contenant (20) est configuré comme un tiroir, avec un fond (21) s'étendant de manière transversale à partir de l'élément en forme de plaque (16) et des paires respectives de parois latérales (23, 24) opposées s'étendant de manière périphérique dans le fond (21), ledit élément de fermeture en forme de plaque (16) définissant au moins l'une desdites parois latérales (23, 24) du contenant.

3. Four selon la revendication 2, dans lequel le fond (21) dudit contenant (20) a une forme trapézoïdale et la paroi latérale (22) opposée à l'élément de fermeture en forme de plaque (16) s'étend parallèlement audit élément, les parois latérales (23, 24) de l'autre paire s'étendant à partir de l'élément de fermeture en forme de plaque (16), convergeant dans la direction de la paroi latérale (22) opposée.

4. Four selon l'une quelconque des revendications précédentes, dans lequel des moyens et des moyens complémentaires sont prévus pour la fixation amovible de l'élément en forme de plaque (16) à la structure du four ou de la porte (3).

5. Four selon la revendication 4, dans lequel lesdits moyens et les moyens complémentaires pour la fixation amovible comprennent une paire d'ouvertures débouchantes (25a, 25b) prévues au niveau des extrémités latérales opposées de l'élément en forme de plaque (16), le long de son bord opposé à celui s'étendant dans la région du fond (21) et une paire respective d'appendices de type broche (26a, 26b) prévus dans la région de l'ouverture (2a) du four et pouvant mettre en prise lesdites ouvertures (25a, 25b) afin de supporter l'élément de fermeture (16) sur le four.

6. Four selon l'une quelconque des revendications précédentes, dans lequel ledit élément formant contenant (20) est obtenu dans une pièce dudit élément de fermeture en forme de plaque (16) à partir d'un métal en feuille cintré.

7. Four selon l'une quelconque des revendications précédentes, dans lequel l'élément formant contenant (20) s'étend de manière prédominante dans une direction parallèle au plan définissant l'élément de fermeture en forme de plaque (16), et a une dimension globale transversale réduite par rapport à ladite direction ayant une dimension afin de permettre de rester comprise dans l'épaisseur de la porte (3) du four lorsqu'il est monté.

8. Four selon l'une quelconque des revendications précédentes, dans lequel ledit élément en forme de plaque (16) est prévu avec une ou plusieurs ouvertures débouchantes (30), afin de placer le contenant (20) en communication de fluide avec la chambre de cuisson (2), de sorte que le condensat collecté dans le contenant est au moins partiellement transporté à l'intérieur de la chambre de cuisson à travers lesdites une ou plusieurs ouvertures (30).

9. Four selon la revendication 2 et la revendication 8, dans lequel un déflecteur de surface (31) agencé à l'intérieur du contenant (20) est prévu dans une position éloignée du fond (21) dudit contenant, et approprié pour guider le liquide collecté dans le contenant (20) dans la direction des ouvertures (30).

10. Four selon la revendication 9, dans lequel ledit déflecteur de surface (31) s'étend de manière transversale à partir de l'élément de fermeture en forme de plaque (16) et a une inclinaison prédéterminée dans la direction desdites ouvertures (30) afin de faciliter le transport du liquide collecté dans le contenant.

11. Four selon la revendication 10, dans lequel ledit déflecteur de surface (31) s'étend entre les parois latérales (23, 24) opposées du contenant (20) et également entre l'élément en forme de plaque (16) et la paroi latérale (22) opposée lui faisant face.
